# EUROPEAN PATENT APPLICATION

(11) **EP 2 093 554 A1**
(43) Date of publication of application: **26.08.2009**
(21) Application number: 07850462.8
(22) Date of filing: 12.12.2007
(51) Int. Cl.: G01M 17/06

(54) **LOAD DEVICE FOR EVALUATING PERFORMANCE OF STEERING DEVICE**

(30) Priority: 21.12.2006 JP 2006344593
(71) Applicant: JTEKT Corporation, Osaka-shi Osaka 542-8502 (JP)
(72) Inventor: OBATA, Hiroshi, Osaka-shi Osaka 542-8502 (JP); TAMAIZUMI, Terutaka, Osaka-shi Osaka 542-8502 (JP)
(74) Representative: Steil, Christian
(86) International application number: PCT/JP2007/073911
(87) International publication number: WO 2008/075590

(57) **Abstract**

An inventive load apparatus for performance evaluation of a steering system has a simple construction and yet is capable of faithfully reproducing a tire load observed when the steering system is actually mounted on a motor vehicle. A compression load spring device (12) includes a piston (18) which is axially movable within a cylinder (17), and a pair of springs (20, 21) which resiliently urge the piston (18) to hold the piston (18) in a force balanced state at a neutral position in the cylinder. The piston (18) is connected to a rod (19) having one end (19a) serving as a load output portion. A load outputted from the load output portion (19a) is multiplied by a preset factor by means of a lever mechanism (13), and the resulting load is applied to the steering system (30).

## Description

### TECHNICAL FIELD

The present invention relates to a load apparatus for performance evaluation of a steering system and particularly to a load apparatus which is applicable to a testing apparatus for performance test and evaluation of a steering system before the steering system is actually mounted on a motor vehicle.

### BACKGROUND ART

A steering system to be mounted on a motor vehicle is generally tested by means of a testing apparatus for performance evaluation thereof before being mounted on a motor vehicle, because the steering system provides different steering feelings depending upon a counter force received from a road surface during traveling of the motor vehicle.

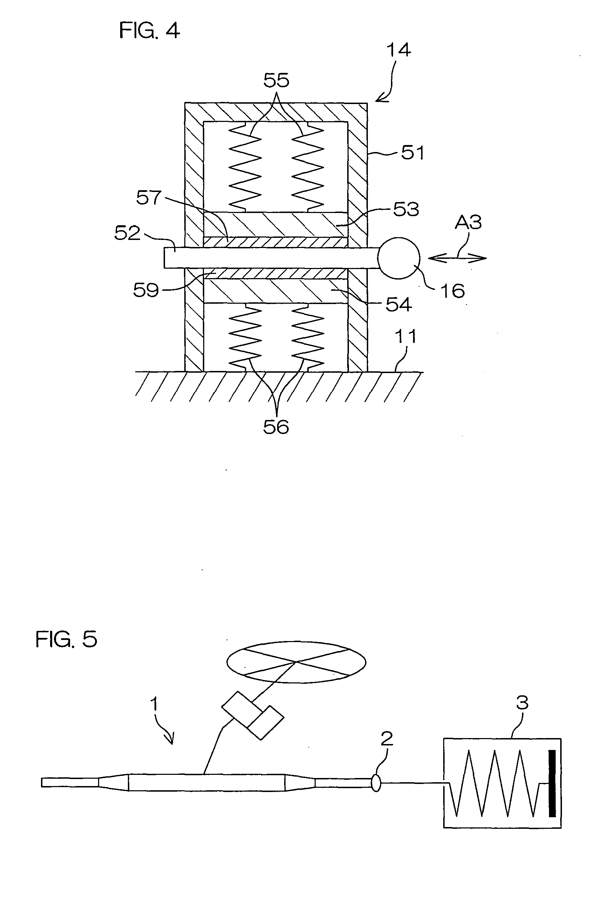

It is a conventional practice to test and evaluate the steerability of a steering system 1, as shown in Fig. 5, by connecting a spring load device 3 to one of tire attachment portions 2 of the steering system 1, and reproducing a tire load by the spring load device 3.

However, the use of the aforementioned spring load device 3 suffers from the following drawbacks:
(a) The spring load device 3 is incapable of faithfully reproducing the tire load of the motor vehicle. Particularly, it is impossible to evaluate the steering system for influences of a change in tire load due to a change in vehicle speed, the wear of tires, and the roll and the yaw of the motor vehicle.
(b) The spring load device 3 suffers from variations in load due to the rattling of springs occurring when the steering system 1 is operated at around a middle point of a steering range (at a neutral steering position) and, therefore, is not suitable for precision measurement at around the middle point of the steering range (at the neutral steering position).

Further, Patent Document 1 discloses a testing system to be used for performance evaluation of an electric power steering system. The testing system disclosed in Patent Document 1 is adapted to determine a steering counter force based on a motor vehicle simulation model, and apply a load corresponding to the determined steering counter force to a steering output portion of the electric power steering system. The testing system disclosed in Patent Document 1 is capable of accurately simulating the application of the steering counter force and, hence, properly evaluating the performance of the electric power steering system.
Patent Document 1: JP-A-2005-172528

### DISCLOSURE OF THE INVENTION

### PROBLEMS TO BE SOLVED BY THE INVENTION

The aforementioned spring load device 3, which is used as a load apparatus for the performance evaluation of the steering system, disadvantageously fails to faithfully reproduce the tire load observed when the steering system is actually mounted on the motor vehicle.

On the other hand, the testing system disclosed in Patent Document 1 is capable of accurately reproduce the tire load (steering counter force) according to the vehicle speed based on the motor vehicle simulation model, but disadvantageously has a complicated construction and slow response.

In view of the foregoing, it is an object of the present invention to provide a load apparatus for performance evaluation of a steering system, the load apparatus having a relatively simple construction and yet being capable of faithfully reproducing a tire load observed when the steering system is actually mounted on a motor vehicle.

### MEANS FOR SOLVING THE PROBLEMS

According to an inventive aspect as set forth in claim 1, there is provided a load apparatus for steering system performance evaluation, the load apparatus including: a load generating mechanism (12) including a piston (18) which is axially movable within a cylinder (17), a rod (19) which is connected to the piston and has one end projecting from the cylinder and serving as a load output portion (19a), the rod being axially movable as the piston is moved, and a pair of resilient members (20, 21) which respectively apply resilient forces to the piston from axially opposite sides of the piston to hold the piston in a force balanced state at a predetermined neutral position in the cylinder; and a load transmission mechanism (13) having opposite ends, one of which is connected to the load output portion of the load generating mechanism and the other of which is connectable to a steering output portion (35a) of a steering system (30) to be subjected to the performance evaluation, the load transmission mechanism being configured to multiply a load outputted from the load output portion by a preset factor and transmit the resulting load to the steering output portion.

The parenthesized alphanumeric characters denote corresponding structural elements in embodiments to be described later. This definition is applicable to the following description in this section.

With the aforementioned arrangement, the load generating mechanism (12) includes the piston (18) axially movable within the cylinder, and the pair of resilient members (20, 21) which respectively act on the axially opposite ends of the piston to apply the resilient forces so as to hold the piston in the force balanced state at the predetermined neutral position (e.g., an axially generally middle position) in the cylinder. If the piston is axially displaced, a load is generated according to the displacement (movement amount), and the load is outputted from the one end (19a) of the rod connected to the piston. When the piston is axially moved either leftward or rightward from the neutral position in the cylinder, the piston generates the load without rattling.

When the piston is located at the neutral position, the load generating mechanism (12) reproduces a state in which the steering system is operated at a middle point of a steering range (at a middle point of a steering angular range) and, in response to a steering operation, the piston is axially moved either leftward or rightward. This makes it possible to smoothly reproduce the tire load based on the movement of the piston. Therefore, the steering feeling observed when the steering system is operated at around the middle point of the steering range (at around the middle point of the steering angular range) can be accurately evaluated.

The load generating mechanism (12) is not directly connected to the steering system but via the load transmission mechanism (13). Therefore, the load generated by the movement of the piston is multiplied by the preset factor, and the resulting load is applied to the steering system.

Where the factor is variably set in the load transmission mechanism (13), a change in tire load due to a change in vehicle speed can be faithfully reproduced.

Therefore, the load apparatus having the aforementioned construction is effective for accurately testing and evaluating the performance of the steering system before the system is actually mounted on the motor vehicle.

According to an inventive aspect as set forth in claim 2, the cylinder is filled with a viscous material (23) in the load apparatus for the steering system performance evaluation according to claim 1.

With the aforementioned arrangement, the resilient forces are applied to the piston (18) in the cylinder by means of the pair of resilient members (20, 21) and, in addition, the cylinder is filled with the viscous material (23). Therefore, a damping effect is provided for damping vibrations of the resilient members occurring due to the movement of the piston, making it possible to reproduce a tire load closer to that observed when the steering system is actually mounted on the motor vehicle.

That is, the damping effect makes it possible to add a time delay occurring due to the roll and the yaw of the motor vehicle to the load to be outputted from the load generating mechanism (12), so that the change in tire load of the motor vehicle can be more faithfully reproduced.

According to an inventive aspect as set forth in claim 3, the load transmission mechanism (13) includes a lever mechanism having a fulcrum (42), an action point (45) and a power point (43), the action point (45) being connected to the load output portion (19a), the power point (43) being connected to the steering output portion (35a), in the load apparatus for the steering system performance evaluation according to claim 1 or 2.

According to an inventive aspect as set forth in claim 4, a ratio of a distance between the fulcrum (42) and the action point (45) to a distance between the fulcrum (42) and the power point (43) is variable in the load apparatus for the steering system performance evaluation according to claim 3.

Where the load transmission mechanism is implemented by the so-called lever mechanism, the load transmission mechanism can multiply the load by the preset factor and easily change the factor to any multiple number with the simple construction. Since the spring constant of the load generating mechanism (12) can be changed by changing the factor, it is possible to reproduce the tire load at different vehicle speeds.

According to an inventive aspect as set forth in claim 5, the load apparatus for the steering system performance evaluation according to any of claims 1 to 4 further includes a frictional force applying mechanism (14) which is connectable to the steering output portion of the steering system to apply a preset frictional force to the steering output portion.

With the aforementioned arrangement, the load is applied to the steering system by the load generating mechanism (12), and the preset frictional force is applied to the steering system by the frictional force applying mechanism (14). The frictional force reproduces a hysteresis loss occurring due to the friction of tires, thereby reproducing tire frictional characteristics closer to those of the actual motor vehicle. Thus, the performance of the steering system can be accurately evaluated.

### BEST MODE FOR CARRYING OUT THE INVENTION

Embodiments of the present invention will hereinafter be described specifically with reference to the attached drawings.

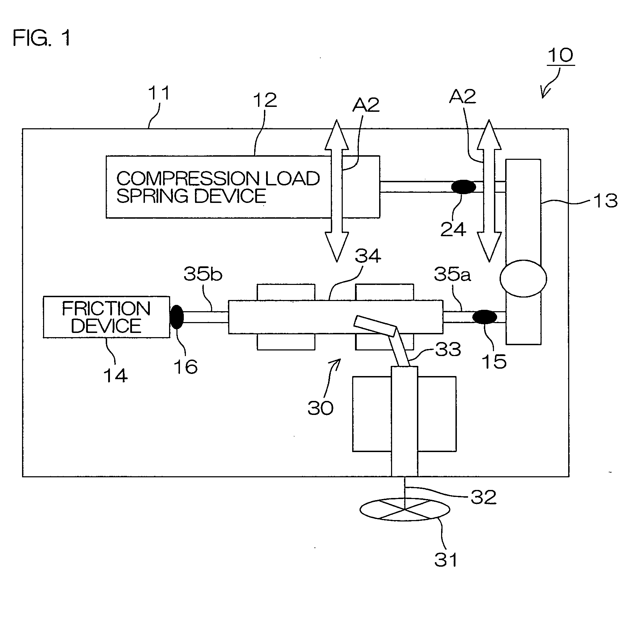

Fig. 1 is a schematic block diagram showing, in plan, an exemplary construction of a load apparatus for steering system performance evaluation according to an embodiment of the present invention.

The load apparatus 10 includes a base plate 11 having a rectangular plan shape and a flat upper surface. A compression load spring device 12 serving as a load generating mechanism, a lever mechanism 13 serving as a load transmission mechanism, and a friction device 14 serving as a frictional force applying mechanism are disposed in a predetermined positional relationship on the base plate 11. A steering system 30 to be subjected to the performance evaluation can be connected to the lever mechanism 13 and the friction device 14.

More specifically, the steering system 30 has a steering wheel 31, steering shafts 32, 33, a steering mechanism 34 including a pinion and a rack shaft, and a pair of tie rods 35a, 35b each defined as a steering output portion. The lever mechanism 13 is connected to one 35a of the tie rods, for example, via a universal joint 15. Further, the friction device 14 is connected to the other tie rod 35b via a universal joint 16.

When the steering wheel 31 of the steering system 30 is operated in this state, the tie rods 35a, 35b are laterally moved in synchronism. With the tie rods 35a, 35b being connected to the lever mechanism 13 and the friction device 14, respectively, the friction device 14 and the compression load spring device 12 connected to the lever mechanism 13 apply to the steering system 30 a tire load equivalent to that observed when the steering system 30 is actually mounted on a motor vehicle.

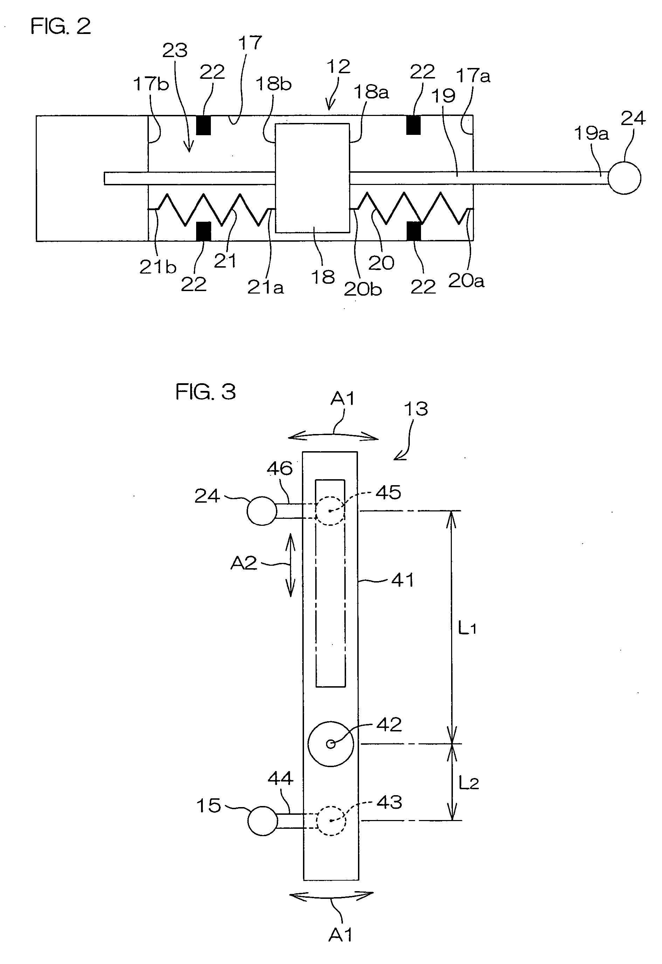

Fig. 2 is a schematic diagram showing an exemplary construction of the compression load spring device 12. The compression load spring device 12 serving as the load generating mechanism includes a hollow cylindrical or angular tubular cylinder 17, a piston 18 provided in the cylinder 17 and movable axially of the cylinder 17, and a rod 19 connected to the piston 18 as extending axially of the cylinder 17. Springs 20, 21 apply resilient forces (which are generated when the springs 20, 21 are in a compressed state to be decompressed) from axially opposite sides of the piston 18 so as to hold the piston 18 in a force balanced state, for example, at an axially generally middle position (a position shown in Fig. 2 and defined as a neutral position) of the cylinder 17. More specifically, the spring 20 is a coil spring, which has a right end 20a engaged with a right wall 17a of the cylinder 17, and a left end 20b engaged with a right face 18a of the piston 18. Similarly, the spring 21 has a left end 21b engaged with a left wall of the cylinder 17, and a right end 21a engaged with a left face 18b of the piston 18. The spring 21 is compressed in a predetermined compressed state.

In Fig. 2, the springs 20, 21 are schematically illustrated as being disposed in a lower portion of the cylinder 17. In practice, it is desirable that the springs 20, 21 are each disposed about the rod 19 as surrounding the rod 19.

In the aforementioned arrangement, the springs 20, 21 have the same spring constant, so that the piston 18 is held in the force balanced state at the axially generally middle position in the cylinder 17. That is, the spring 20 applies a leftward resilient biasing force to the piston 18 from the right side of the piston 18, and the spring 21 applies a rightward resilient biasing force to the piston 18 from the left side of the piston 18. These resilient biasing forces are balanced at the piston 18.

The rod 19 extends axially through the cylinder 17, and is combined with the piston 18 at a center portion of the piston 18. The rod 19 has a right end portion projecting from the cylinder 17, and a right end 19a serving as a load output portion. When a leftward force is applied to the load output portion 19a, for example, the piston 18 is moved leftward against the force of the spring 21 in the cylinder 17. When a rightward force is applied to the load output portion 19a, the piston 18 is moved rightward against the force of the spring 20 in the cylinder 17. The axial movement of the piston 18 in the cylinder 17 occurs against the resilient forces of the springs 20, 21 to provide a certain load. Therefore, the axial movement is regarded as the tire load.

The compression load spring device 12 further includes stoppers 22 for limiting the movement of the laterally movable piston 18 in the cylinder 17.

Further, the cylinder 17 is filled with a viscous material 23 having a predetermined viscosity. The viscous material 23 provides a damping effect for damping vibrations of the springs 20, 21 which may occur when the piston 18 is axially moved. The damping effect is contributable to reproduction of a time delay which may occur due to the roll and the yaw of the motor vehicle when the steering system 30 is actually mounted on the motor vehicle.

The load output portion 19a located at the right end of the rod 19 is connected to the lever mechanism 13, for example, via a universal joint 24.

Fig. 3 is a schematic diagram showing an exemplary construction of the lever mechanism 13. The lever mechanism 13 includes a main bar 41 extending longitudinally vertically in Fig. 3, and the main bar 41 is rotatably attached to the base plate 11 at a predetermined longitudinal position serving as a fulcrum 42. The main bar 41 is rotatable in arrow directions A1 about the fulcrum 42 along the surface of the base plate 11.

The main bar 41 has a power point 43 located at one end portion (a lower portion in Fig. 3) thereof. One end of an auxiliary bar 44 is pivotally attached to the power point 43, and the universal joint 15 is attached to the other end of the auxiliary bar 44. As described above, the one tie rod 35a of the steering system 30 to be subjected to the performance evaluation is connected to the universal joint 15.

The main bar 41 has an action point 45 located at the other end portion (an upper portion in Fig. 3) thereof. One end of an auxiliary bar 46 is pivotally attached to the action point 45, and the universal joint 24 is provided at the other end of the auxiliary bar 46. As described above, the load output portion 19a located at one end of the rod 19 of the compression load spring device 12 is connected to the other end of the auxiliary bar 46 via the universal joint 24.

The action point 45 is movable longitudinally of the main bar 41 as indicated by an arrow A2. By moving the action point 45, the ratio of a distance L1 between the fulcrum 42 and the action point 45 to the distance (fixed distance) L2 between the fulcrum 42 and the power point 43, i.e. , an L1:L2 ratio, can be changed. When a load generated by the compression load spring device 12 is transmitted to the steering system 30, the load can be multiplied by a factor preset by changing the L1:L2 ratio in the lever mechanism 13. Thus, the spring constant in the compression load spring device 12 is apparently changed to change the load to be applied to the steering system 30, whereby tire load characteristics at different vehicle speeds can be faithfully reproduced.

When the action point 45 is moved in an arrow direction A2, the compression load spring device 12 is moved together in the arrow direction A2 as shown in Fig. 1.

Fig. 4 is a schematic sectional structural diagram showing an exemplary construction of the friction device 14. The friction device 14 includes a casing 51 fixed to the base plate 11, a rod 52 extending horizontally through the casing 51, an upper pad 53 pressing the rod 52 from above, a lower pad 54 pressing the rod 52 from below, a spring 55 for urging the upper pad 53 in a pressing direction, and a spring 56 for urging the lower pad 54 in a pressing direction. Friction materials 57, 59 each having a predetermined friction coefficient are provided on portions of the upper pad 53 and the lower pad 54 in contact with the rod 52.

With this arrangement, the rod 52 receives frictional forces generated by the friction materials 57, 59 when being slid longitudinally thereof in arrow directions A3.

The universal joint 16 is attached to a right end of the rod 52. As described above, the left tie rod 35b of the steering system 30 is connected to the right end of the rod 52 via the universal joint 16.

Referring again to Fig. 1, the tire load of the motor vehicle reproduced by the compression load spring device 12 and the friction device 14 is applied to the steering system 30 to be subjected to the performance evaluation. Therefore, the performance of the steering system 30 can be accurately evaluated.

Particularly, the compression load spring device 12 is free from rattling of the springs 20, 21 which may otherwise occur when the springs 20, 21 each have a natural length during compression and decompression thereof, so that the steering feeling can be properly evaluated when the steering wheel 31 is operated at around a middle point of a steering range (at a middle point of a steering angular range). The compression load spring device 12 is filled with the viscous material. The viscous material ensures that load characteristics are reproduced with a time delay occurring due to the roll and the yaw of the motor vehicle when the steering system 30 is actually mounted on the motor vehicle.

Further, the load generated by the compression load spring device 12 is multiplied by the preset factor by the lever mechanism 13. Therefore, a change in tire load occurring due to a change in vehicle speed can be reproduced by changing the factor.

Further, a hysteresis loss occurring due to tire wear can be reproduced by the friction device 14. Therefore, friction characteristics closer to those of the actual motor vehicle can be taken into consideration for the evaluation.

It should be understood that the present invention be not limited to the embodiments described above, but various modifications may be made within the purview of the appended claims.

### BRIEF DESCRIPTION OF THE DRAWINGS

Fig. 1 is a schematic block diagram showing an exemplary construction of a load apparatus for steering system performance evaluation according to an embodiment of the present invention.
Fig. 2 is a schematic diagram showing an exemplary construction of a compression load spring device.
Fig. 3 is a schematic diagram showing an exemplary construction of a lever mechanism.
Fig. 4 is a schematic sectional structural diagram showing an exemplary construction of a friction device.
Fig. 5 is a schematic diagram showing the construction of a prior-art spring load device for steering system performance evaluation.

## Claims

1. A load apparatus for steering system performance evaluation, comprising:
a load generating mechanism including a piston which is axially movable within a cylinder, a rod which is connected to the piston and has one end projecting from the cylinder and serving as a load output portion, the rod being axially movable as the piston is moved, and a pair of resilient members which respectively apply resilient forces to the piston from axially opposite sides of the piston to hold the piston in a force balanced state at a predetermined neutral position in the cylinder; and
a load transmission mechanism having opposite ends, one of which is connected to the load output portion of the load generating mechanism and the other of which is connectable to a steering output portion of a steering system to be subjected to the performance evaluation, the load transmission mechanism being configured to multiply a load outputted from the load output portion by a preset factor and transmit the resulting load to the steering output portion.

2. A load apparatus for steering system performance evaluation as set forth in claim 1, wherein the cylinder is filled with a viscous material.

3. A load apparatus for steering system performance evaluation as set forth in claim 1 or 2, wherein the load transmission mechanism includes a lever mechanism having a fulcrum, an action point and a power point, the action point being connected to the load output portion, the power point being connected to the steering output portion.

4. A load apparatus for steering system performance evaluation as set forth in claim 3, wherein a ratio of a distance between the fulcrum and the action point to a distance between the fulcrum and the power point is variable.

5. A load apparatus for steering system performance evaluation as set forth in any of claims 1 to 4, further comprising a frictional force applying mechanism which is connectable to the steering output portion of the steering system to apply a preset frictional force to the steering output portion.
